# EUROPEAN PATENT APPLICATION

(11) **EP 4 465 403 A2**
(43) Date of publication of application: **20.11.2024**
(21) Application number: 24204351.1
(22) Date of filing: 16.01.2020
(51) Int. Cl.: H01M 10/054

(54) **SODIUM ION BATTERY AND APPARATUS CONTAINING SODIUM ION BATTERY**

(30) Priority: 02.02.2019 CN 201910107675
(62) Divisional of application: 20749681.1
(71) Applicant: Contemporary Amperex Technology (Hong Kong) Limited, Central, Central And Western District (HK)
(72) Inventor: LIU, Qian, Ningde City 352100 (CN); GUO, Yongsheng, Ningde City 352100 (CN); LIANG, Chengdu, Ningde City 352100 (CN); LIN, Wenguang, Ningde City 352100 (CN); WANG, Gang, Ningde City 352100 (CN)
(74) Representative: Boult Wade Tennant LLP

(57) **Abstract**

The present application discloses a sodium-ion battery (5) and an apparatus comprising the same. The sodium-ion battery (5) comprises a positive electrode plate and a negative electrode plate; the positive electrode plate comprises a positive electrode current collector and a positive electrode active material layer, the positive electrode active material layer is disposed on at least one surface of the positive electrode current collector and comprises a positive electrode active material; the negative electrode plate comprises a negative electrode current collector and a negative electrode active material layer, the negative electrode active material layer is disposed on at least one surface of the negative electrode current collector and comprises a negative electrode active material, and the negative electrode active material is hard carbon; wherein a ratio of a median particle size A of the positive electrode active material to a median particle size B of the negative electrode active material satisfies 0.8 ≤ A/B ≤ 3.

## Description

### TECHNICAL FIELD

The present application belongs to the technical field of energy storage device, and more particularly relates to a sodium-ion battery and an apparatus comprising the same.

### BACKGROUND

Currently, lithium-ion batteries occupy the core position of power batteries, and the lithium-ion batteries also face great challenges, such as increasing shortage of lithium resources, rising price of upstream materials, lagging development of recycling technology and low recycling rate of old batteries. Sodium-ion batteries can be charged and discharged through the intercalation and the deintercalation of sodium ions between the positive electrode and the negative electrode, and compared with the lithium resources, sodium resources are far more abundant, more widely distributed and far lower cost, therefore, the sodium-ion batteries are a promising alternative to the lithium-ion batteries and may become a new generation of electrochemical system. However, currently, the widely studied sodium-ion batteries have lower initial coulombic efficiency and worse rate performance.

### SUMMARY

In a first aspect of the present application, there is provided a sodium-ion battery, which comprises a positive electrode plate and a negative electrode plate; the positive electrode plate comprises a positive electrode current collector and a positive electrode active material layer, the positive electrode active material layer is disposed on at least one surface of the positive electrode current collector and comprises a positive electrode active material; the negative electrode plate comprises a negative electrode current collector and a negative electrode active material layer, the negative electrode active material layer is disposed on at least one surface of the negative electrode current collector and comprises a negative electrode active material, and the negative electrode active material is hard carbon; wherein a ratio of a median particle size A of the positive electrode active material to a median particle size B of the negative electrode active material satisfies 0.05 ≤ A/B ≤ 3.

In a second aspect of the present application, there is provided an apparatus, which comprises the sodium-ion battery according to the first aspect of the present application.

Compared with existing technologies, the present application includes at least the following beneficial effects:
For the sodium-ion battery provided by the present application, the negative electrode active material is hard carbon, and a ratio of a median particle size A of the positive electrode active material to a median particle size B of the negative electrode active material is controlled to fall within a range of from 0.05 to 3, which can reduce the capacity loss in the first charging and discharging process of the battery, and make the battery have higher charging and discharging performance at a high rate, therefore, the sodium-ion battery can have higher initial coulombic efficiency and higher rate performance. The apparatus of the present application comprises the sodium-ion battery provided by the present application, and thus has at least the same advantages as the sodium-ion battery.

### DESCRIPTION OF THE DRAWINGS

In order to explain the technical solutions of the embodiments of the present application more clearly, the drawings for embodiments of the present application will be briefly described below. Apparently, the drawings described below illustrate only some embodiments of the present application. A person of ordinary skill in the art can obtain other drawings based on the drawings without creative work.
Fig. 1 is a schematic diagram of an embodiment of a sodium-ion battery.
Fig. 2 is an exploded view of Fig. 1.
Fig. 3 is a schematic diagram of an embodiment of a battery module.
Fig. 4 is a schematic diagram of an embodiment of a battery pack.
Fig. 5 is an exploded view of Fig. 4.
Fig. 6 is a schematic diagram of an embodiment of an apparatus where a sodium-ion battery is used as a power supply.

### DETAILED DESCRIPTION

In order to make the object, technical solution, and technical effects of the present application apparent, the following further describes the present application in detail with reference to the embodiments. It should be understood that the embodiments described in the present description are only for explaining the present application, and are not intended to limit the application.

For the sake of brevity, only certain numerical ranges are explicitly disclosed herein. However, any lower limit may be combined with any upper limit to form a range that is not explicitly described; and any lower limit may be combined with other lower limits to form a range that is not explicitly described, and any upper limit may be combined with any other upper limit to form a range that is not explicitly described. Further, although not explicitly specified, each point or single value between the endpoints of the range is included in the range. Thus, each point or single value can be used as a lower or upper limit and combined with any other point or single value or combined with other lower or upper limits to form a range that is not explicitly specified.

In the description herein, it should be noted that, unless otherwise stated, the recitation of numerical ranges by "no less than" and "no more than" include all numbers within that range including the endpoints, and the recitation of "more" in the phrase "one or more" includes two or more.

The above-stated summary of the present application is not intended to describe each and every embodiment or implementation disclosed in the present application. The following description illustrates exemplary embodiments more specifically. In many places throughout the application, guidance is provided by means of a series of embodiments, which can be applied in various combinations. In each instance, the enumeration is only a representative group and should not be interpreted as exhaustive.

An embodiment of a first aspect of the present application provides a sodium-ion battery, which comprises a positive electrode plate and a negative electrode plate.

The positive electrode plate comprises a positive electrode current collector and a positive electrode active material layer, the positive electrode active material layer is disposed on at least one surface of the positive electrode current collector and comprises a positive electrode active material. For example, the positive electrode current collector has two opposite surfaces on its thickness direction, and the positive electrode active material layer may be disposed on either or both of the two opposite surfaces of the positive electrode current collector.

The negative electrode plate comprises a negative electrode current collector and a negative electrode active material layer, the negative electrode active material layer is disposed on at least one surface of the negative electrode current collector and comprises a negative electrode active material. For example, the negative electrode current collector has two opposite surfaces on its thickness direction, and the negative electrode active material layer may be disposed on either or both of the two opposite surfaces of the negative electrode current collector.

The negative electrode active material is hard carbon, and a ratio of a median particle size A of the positive electrode active material to a median particle size B of the negative electrode active material satisfies 0.05 ≤ A/B ≤ 3.

For the sodium-ion battery of an embodiment of the present application, the negative electrode active material is hard carbon, and a ratio of a median particle size A of the positive electrode active material to a median particle size B of the negative electrode active material is controlled to fall within a range of from 0.05 to 3, which can reduce the capacity loss in the first charging and discharging process of the battery, make the positive electrode plate and the negative electrode plate both have higher electrons and sodium ions transmission performance, and make the battery have higher charging and discharging performance at a high rate, therefore, the sodium-ion battery can have higher initial coulombic efficiency and higher rate performance.

Furthermore, controlling the ratio of the median particle size A of the positive electrode active material to the median particle size B of the negative electrode active material to fall within a range of from 0.05 to 3 can prevent sodium from precipitating on the negative electrode plate, and therefore, the safety performance of the sodium-ion battery can be improved.

In some embodiments of the present application, A/B may be ≥0.05, ≥0.07, ≥0.1, ≥0.12, ≥0.15, ≥0.2, ≥0.3, ≥0.5, ≥0.6, ≥0.7, or ≥0.8. Further, A/B may be ≤3, ≤2.8, ≤2.7, ≤2.5, ≤2.2, ≤2, ≤1.8, ≤1.5, ≤1.2, ≤1, ≤0.8, ≤0.7, or ≤0.6. Furthermore, the ratio of the median particle size A of the positive electrode active material to the median particle size B of the negative electrode active material satisfies 0.1 ≤ A/B ≤ 1.

When the ratio of the median particle size A of the positive electrode active material to the median particle size B of the negative electrode active material falls within an appropriate range, the initial coulombic efficiency, the rate performance and the safety performance of the sodium-ion battery can be further improved.

In some embodiments, preferably, the positive electrode active material has a median particle size A of from 0.2 µm to 20 µm. The median particle size A of the positive electrode active material is preferably 0.2 µm or more, the interface resistance of the positive electrode active material particles can be decreased, the dispersibility of the positive electrode active material in the positive electrode slurry can be improved, and the solvent-consuming phenomenon can be reduced, which can suppress undesirable agglomeration among the positive electrode active material particles in the positive electrode plate, improve the uniformity of the areal density distribution of the positive electrode plate, and improve the pressing density of the positive electrode plate so as to improve the initial capacity, the initial coulombic efficiency, the rate performance and the cycle life of the sodium-ion battery. The median particle size A of the positive electrode active material is preferably 20 µm or less, the electrons and sodium ions transmission path in the positive electrode active material particles can be shorter, the electrons and sodium ions transmission performance in the positive electrode plate can be improved, and therefore, the sodium-ion battery can have higher rate performance. More preferably, the positive electrode active material has a median particle size A of from 0.6 µm to 15 µm, and particularly preferably from 5 µm to 12 µm.

In some embodiments, preferably, the positive electrode active material has a specific surface area of from 0.1 m²/g to 20 m²/g, more preferably from 0.5 m²/g to 15 m²/g. When the specific surface area of the positive electrode active material falls within an appropriate range, the positive electrode active material can have smaller particle size, and the electrons and sodium ions transmission path in the positive electrode active material particles can be shorter, so that the electrons and sodium ions transmission performance in the positive electrode plate can be improved, and the polarization in the positive electrode plate can be reduced, thereby improving the rate performance of the battery and the capacity retention rate of the battery during the charging and discharging process. The positive electrode active material has an appropriate specific surface area, which can also effectively suppress the agglomeration among the positive electrode active material particles so as to ensure the positive electrode have higher electrochemical performance.

In some embodiments, preferably, the negative electrode active material has a median particle size B of from 0.5 µm to 20 µm, more preferably from 3 µm to 15 µm, and particularly preferably from 5 µm to 12 µm. When the median particle size B of the negative electrode active material is 0.5 µm or more, the capacity loss of the sodium-ion battery during the first charging and discharging process can be reduced, and therefore, the sodium-ion battery can have higher initial coulombic efficiency. When the median particle size B of the negative electrode active material is 20 µm or less, the sodium ions deintercalated from the positive electrode can sufficiently intercalate into the negative electrode, which prevents the sodium from precipitating on the negative electrode plate and reduces the capacity loss, and therefore, the cycle performance and the safety performance of the battery can be improved.

In some embodiments, preferably, the negative electrode active material has a specific surface area of from 0.5 m²/g to 15 m²/g, more preferably from 1 m²/g to 12 m²/g. The negative electrode active material having an appropriate range of specific surface area can enable the negative electrode active material to have a smaller particle size, which improves the sodium ions transmission performance in the negative electrode plate, and prevents the capacity loss and safety hazard caused by the sodium precipitation on the negative electrode plate from happening. In addition, when the specific surface area of the negative electrode active material falls within an appropriate range, the capacity loss during the first charging and discharging process of the battery can be reduced so as to improve the initial coulombic efficiency of the battery.

In some embodiments, a mean interplanar spacing d₀₀₂ of crystal planes (002) of the negative electrode active material is preferably from 0.35 nm to 0.42 nm, more preferably from 0.37 nm to 0.40 nm. When the mean interplanar spacing d₀₀₂ of the crystal planes (002) of the negative electrode active material falls within the aforementioned range, the diffusion performance of the sodium ions in the negative electrode active material particles can be improved so as to further improve the rate performance and the safety performance of the sodium-ion battery. In addition, the volume change of the negative electrode active material caused by the intercalation or the deintercalation of the sodium ions during the charging and discharging process of the battery can be smaller, and therefore, the cycle performance of the battery can be improved.

In some embodiments, for the sodium-ion battery of the present application, a ratio of a porosity P₁ of the positive electrode active material layer to a porosity P₂ of the negative electrode active material layer preferably satisfies 0.15 ≤ P₁/P₂ ≤ 2.5. When the ratio of the porosity P₁ of the positive electrode active material layer to the porosity P₂ of the negative electrode active material layer is controlled to fall within an appropriate range, the sodium ions deintercalated from the positive electrode can sufficiently and quickly intercalate into the negative electrode, so that the capacity elaboration and the kinetic performance of the sodium-ion battery can be improved, thereby improving the capacity performance and the rate performance of the sodium-ion battery.

In addition, when the ratio of the porosity P₁ of the positive electrode active material layer to the porosity P₂ of the negative electrode active material layer is controlled to fall within an appropriate range, the capacity loss due to concentration polarization can be suppressed, side reactions on the positive electrode plate and the negative electrode plate can be decreased, which prevents the sodium from precipitating on the negative electrode plate, thereby improving the capacity retention rate during the cycle process and the safety performance of the sodium-ion battery.

In some embodiments of the present application, P₁/P₂ may be ≥0.15, ≥0.2, ≥0.3, ≥0.4, ≥0.5, ≥0.6, ≥0.7, ≥0.8, ≥0.9, or ≥1.0. Further, P₁/P₂ may be ≤2.5, ≤2.2, ≤2.0, ≤1.9, ≤1.8, ≤1.7, ≤1.6, ≤1.5, ≤1.4, ≤1.3, ≤1.2, ≤1.0, or ≤0.9. More preferably, 0.3 ≤ P₁/P₂ ≤ 1.8.

In some embodiments, preferably, the positive electrode active material layer has a porosity P₁ of from 10% to 40%, and more preferably from 20% to 38%. When the porosity of the positive electrode active material layer falls within an appropriate range, the positive electrode active material layer can have appropriate electrolyte retention amount, good electrolyte infiltration performance and higher pressing density, which are beneficial to making the positive electrode active material layer have higher electrons and sodium ions conduction performance, thereby enabling the sodium-ion battery to have better capacity elaboration, higher kinetic performance and better rate performance. The positive electrode active material layer has higher pressing density, and the electrolyte retention amount in the positive electrode active material layer will not be too large, which can also enable the sodium-ion battery to have higher energy density.

In some embodiments, preferably, the negative electrode active material layer has a porosity P₂ of from 15% to 45%, and more preferably from 28% to 38%. When the porosity of the negative electrode active material layer falls within an appropriate range, the negative electrode active material layer can have appropriate electrolyte retention amount, good electrolyte infiltration performance and higher pressing density, which are beneficial to making the negative electrode active material layer have higher electrons and sodium ions conduction performance, thereby enabling the sodium-ion battery to have better capacity elaboration, higher kinetic performance and better rate performance. The negative electrode active material layer has higher pressing density, and the electrolyte retention amount in the negative electrode active material layer will not be too large, which can also enable the sodium-ion battery to have higher energy density.

In some embodiments, the sodium-ion battery also satisfies that the positive electrode active material layer has a porosity P₁ of from 10% to 40%, the negative electrode active material layer has a porosity P₂ of from 15% to 45%, and 0.15 ≤ P₁/P₂ ≤ 2.5, which can enable the sodium-ion battery to have better comprehensive performance. Furthermore, the positive electrode active material layer has a porosity P₁ of from 20% to 38%, the negative electrode active material layer has a porosity P₂ of from 28% to 38%, and 0.3 ≤ P₁/P₂ < 1.8.

In some embodiments, for the sodium-ion battery the present application, preferably, a ratio of an areal density C of the positive electrode active material layer to an areal density D of the negative electrode active material layer satisfies 1.5 ≤ C/D ≤ 4.5. The ratio of the areal density C of the positive electrode active material layer to the areal density D of the negative electrode active material layer falls within an appropriate range, which is beneficial to ensuring that the sodium-ion battery can have higher capacity elaboration and higher initial coulombic efficiency, and also ensuring that the sodium ions deintercalated from the positive electrode can sufficiently intercalate into the negative electrode so as to prevent the sodium from precipitating on the negative electrode plate.

In some embodiments of the present application, C/D may be ≥1.5, ≥1.6, ≥1.7, ≥1.8, ≥1.9, ≥2.0, ≥2.1, ≥2.2, ≥2.3, ≥2.5, or ≥2.6. Further, C/D may be ≤4.5, ≤4.2, ≤4.0, ≤3.7, ≤3.5, ≤3.2, ≤3.0, ≤2.9, ≤2.8, ≤2.7, ≤2.6, ≤2.5, or ≤2.3. Preferably, 2.1 ≤ C/D ≤ 2.8.

In some embodiments, preferably, the positive electrode active material layer has an areal density C of from 5 mg/cm² to 30 mg/cm², more preferably from 6 mg/cm² to 24 mg/cm², and particularly preferably from 10 mg/cm² to 18 mg/cm². When the areal density of the positive electrode active material layer falls within an appropriate range, the sodium-ion battery can have higher capacity and the positive electrode active material layer can have smaller thickness, which can reduce the migration distance of the electrons and the sodium ions in the positive electrode active material layer, and also reduce the resistance to the migration of the electrons and the sodium ions from the positive electrode active material particles, the interface thereof and the binder during the migration process thereof, thereby making the sodium-ion battery have higher rate performance and higher cycle performance. Therefore, controlling the areal density C of the positive electrode active material layer to fall within an appropriate range is beneficial to improving the specific capacity, the initial coulombic efficiency and the cycle performance of the sodium-ion battery.

In some embodiments, preferably, the negative electrode active material layer has an areal density D of from 1.5 mg/cm² to 15 mg/cm², and more preferably from 5 mg/cm² to 10 mg/cm². When the negative electrode active material layer has an appropriate areal density, the negative electrode active material layer can have sufficient active sites for the intercalation of the sodium ions deintercalated from the positive electrode, which can reduce the loss of the active sodium and prevent the sodium from precipitating on the negative electrode plate so as to make the battery have higher cycle performance and safety performance. In addition, the battery can also have higher initial coulombic efficiency. Therefore, controlling the areal density D of the negative electrode active material layer to fall within an appropriate range is beneficial to improving the initial coulombic efficiency, the cycle performance and the safety performance of the sodium-ion battery.

### [The positive electrode plate]

For the positive electrode plate, the positive electrode active material may comprise one or more of sodium transition metal oxides, polyanionic compounds and Prussian blue compounds. In one embodiment, for the sodium-ion battery of the present application, a negative electrode plate using hard carbon as a negative electrode active material is used together with a positive electrode plate where the positive electrode active material comprises one or more of sodium transition metal oxides, polyanionic compounds and Prussian blue compounds, which makes the sodium-ion battery have higher capacity performance and higher energy density.

As an example, the sodium transition metal oxides may be enumerated as follows:
Na_{1-*x*}Cu*ₕ*Fe*ₖ*Mn*ₗ*M¹ₘO_{2-*y*}, wherein M¹ is one or more of Li, Be, B, Mg, Al, K, Ca, Ti, Co, Ni, Zn, Ga, Sr, Y, Nb, Mo, In, Sn and Ba, 0 < *x* ≤ 0.33, 0< *h* ≤ 0.24, 0 ≤ *k* ≤ 0.32, 0 < *l* ≤ 0.68, 0 ≤ *m* < 0.1, *h+k+l+m=*1*,* 0 ≤ y < 0.2;
Na_{0.67}Mn_{0.7}Ni_{z}M²_{0.3.*z*}O₂, wherein M² is one or more of Li, Mg, Al, Ca, Ti, Fe, Cu, Zn and Ba, 0 < *z* ≤ 0.1;
Na*ₐ*Li*_{b}*Ni*_{c}*Mn*_{d}*Fe*ₑ*O₂, wherein 0.67 < *a* ≤ 1, 0 *< b* < 0.2, 0 < c < 0.3, 0.67 < *d+e* < 0.8, *b+c+d+e=*1*.*

As an example, the polyanionic compounds may be enumerated as follows:
A¹*_{f}*M³*_{g}*(PO₄)*ᵢ*O*ⱼ*X¹_{3-*j*}, wherein A is one or more of H, Li, Na, K and NH₄, M³ is one or more of Ti, Cr, Mn, Fe, Co, Ni, V, Cu and Zn, X¹ is one or more of F, Cl and Br, 0 < *f* ≤ 4, 0 < g ≤ 2, 1 ≤ *i* ≤ 3, 0 ≤ *j* ≤ 2;
Na*ₙ*M⁴PO₄X², wherein M⁴ is one or more of Mn, Fe, Co, Ni, Cu and Zn, X² is one or more of F, Cl and Br, 0 < *n* ≤ 2;
Na*ₚ*M⁵*_{q}*(SO₄)₃, wherein M⁵ is one or more of Mn, Fe, Co, Ni, Cu and Zn, 0 < *p* ≤ 2, 0 < *q* ≤ 2;
Na*ₛ*Mn*ₜ*Fe_{3-*t*}(PO₄)₂(P₂O₇), wherein 0 < *s* ≤ 4, 0 ≤ *t* ≤ 3, for example, t is 0, 1, 1.5, 2, or 3.

As an example, the Prussian blue compounds may be enumerated as follows:
A*ᵤ*M⁶*ᵥ*[M⁷(CN)₆]_{w}•*x*H₂O, wherein A is one or more of H⁺, NH⁴⁺, alkali metal cations and alkaline-earth metal cations, M⁶ and M⁷ are respectively one or more of transition metal cations, 0 < *u* ≤ 2, 0 < *v* ≤ 1, 0 < *w* ≤ 1, 0 < *x* < 6. For example, A is one or more of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺ and Ra²⁺, M⁶ and M⁷ are respectively transition metal cations from one or more of Ti, V, Cr, Mn, Fe, Co, Ni, Cu, Zn, Sn, and W. Preferably, A is one or more of Li⁺, Na⁺ and K⁺, M⁶ is a transition metal cation from one or more of Mn, Fe, Co, Ni and Cu, and M⁷ is a transition metal cation from one or more of Mn, Fe, Co, Ni and Cu.

In some embodiments, the positive electrode active material layer may also optionally comprise a conductive agent. The conductive agent is used to improve the conductivity of the positive electrode active material layer. The present application does not specifically limit the type of the conductive agent, and the specific type of the conductive agent may be selected according to actual needs. As an example, the conductive agent may comprise one or more of superconducting carbon, acetylene black, carbon black, Ketjen black, carbon dots, carbon nanotubes, graphene and carbon nanofibers.

In some embodiments, the positive electrode active material layer may also optionally comprise a binder. The binder is used to firmly bond the positive electrode active material and the optional conductive agent onto the positive electrode current collector. The present application does not specifically limit the type of the binder, and the specific type of the binder may be selected according to actual needs. As an example, the binder may comprise one or more of styrene butadiene rubber (SBR), water-based acrylic resin, sodium carboxymethyl cellulose (CMC-Na), polyvinylidene fluoride (PVDF), polytetrafluoroethylene (PTFE), ethylene-vinyl acetate copolymer (EVA) and polyvinyl alcohol (PVA).

The positive electrode current collector may be a metal foil, a carbon-coated metal foil or a porous metal plate, and preferably may be an aluminum foil.

### [The negative electrode plate]

For the negative electrode plate, in some embodiments, the negative electrode active material layer may also optionally comprise a conductive agent. The conductive agent is used to improve the conductivity of the negative electrode active material layer. The present application does not specifically limit the type of the conductive agent, and the specific type of the conductive agent may be selected according to actual needs. As an example, the conductive agent may comprise one or more of superconducting carbon, acetylene black, carbon black, Ketjen black, carbon dots, carbon nanotubes, graphene and carbon nanofibers.

In some embodiments, the negative electrode active material layer may also optionally comprise a binder. The binder is used to firmly bond the negative electrode active material and the optional conductive agent onto the negative electrode current collector. The present application does not specifically limit the type of the binder, and the specific type of the binder may be selected according to actual needs. As an example, the binder may be one or more of styrene butadiene rubber (SBR), styreneic block copolymers (SBCs) and water-based acrylic resin.

In some embodiments, the negative electrode active material layer may also optionally comprise a thickener, for example, carboxymethyl cellulose sodium (CMC-Na). However, the present application is not limited thereto, the present application may also use other materials that may be used as a thickener of the negative electrode plate of the sodium-ion battery.

The negative electrode current collector may be a metal foil, a carbon-coated metal foil or a porous metal plate, and preferably may be a copper foil.

The sodium-ion battery provided by an embodiment of the present application further comprises a separator and an electrolyte. The separator is disposed between the positive electrode plate and the negative electrode plate to play a role of isolation. An electrode assembly of the sodium-ion battery may have a laminated structure formed by stacking the negative electrode plate, the separator and the positive electrode plate in order, or may have a wound structure formed by stacking the negative electrode plate, the separator and the positive electrode plate in order and then being wound. The electrolyte infiltrates the electrode assembly.

### [The separator]

For the separator, there is no specific limitation in the present application, and any well-known porous structure separator having good electrochemical stability and mechanical stability may be selected according to actual needs. For example, the separator may be a single-layer film or a multi-layer film containing one or more of glass fiber, non-woven fabric, polyethylene, polypropylene and polyvinylidene fluoride.

### [The electrolyte]

The electrolyte may comprise an organic solvent and a sodium salt. Any organic solvent and sodium salt that may be used in the sodium-ion battery may be selected according to actual needs. As an example, the organic solvent may comprise one or more of ethylene carbonate (EC), propylene carbonate (PC), ethyl methyl carbonate (EMC) and diethyl carbonate (DEC). The sodium salt may comprise one or more of NaPF₆, NaClO₄, NaBCl₄, NaSO₃CF₃ and Na(CH₃)C₆H₄SO₃.

Next, a method for preparing a sodium-ion battery provided by an embodiment of the present application is described, and the aforementioned sodium-ion battery may be prepared by using this method. The method comprises the following steps: dispersing a positive electrode active material, a conductive agent, and a binder into a solvent (for example, N-methylpyrrolidone, NMP) to form a uniform positive electrode slurry, coating the positive electrode slurry onto two opposite surfaces of a positive electrode current collector, and then drying and cold pressing to obtain a positive electrode plate; dispersing a negative electrode active material, a conductive agent, a binder and a thickener into a solvent (for example, deionized water) to form a uniform negative electrode slurry, coating the negative electrode slurry onto two opposite surfaces of a negative electrode current collector, and then drying and cold pressing to obtain a negative electrode plate; stacking the positive electrode plate, an separator and the negative electrode plate in order to obtain an electrode assembly, or stacking the positive electrode plate, an separator and the negative electrode plate in order and then winding to obtain an electrode assembly; putting the electrode assembly into a case; injecting an electrolyte and encapsulating to obtain the sodium-ion battery.

In the present application, the median particle size of the active material has a well-known meaning in the art, and is also called a mean particle size or an average particle size Dᵥ50, which is used to illustrate the average granularity of the active material, a physical meaning thereof is that the particles having a particle size smaller than the median particle size account for 50% of a total volume of all the particles, and the particles having a particle size larger than the median particle size also account for 50% of a total volume of all the particles. The median particle size may be easily measured with a laser particle size analyzer, such as Mastersizer 3000 laser particle size analyzer from Malvern Instruments Co., Ltd., UK.

The specific surface area of the active material has a well-known meaning in the art, and may be measured using an instrument and a method well-known in the art. For example, the specific surface area of the active material may be measured with the analysis of the specific surface area by nitrogen adsorption and calculated by a BET (Brunauer Emmett Teller) method, in which the analysis of the specific surface area by nitrogen adsorption may be carried out by using a specific surface and pore size analyzer with a type of Tri Star II (from Micromeritics, USA). The measurement may refer to GB/T 19587-2004.

As a specific example, the positive electrode active material is dried in a vacuum oven at 200 °C for 2 hours; an adsorption and desorption curve with a relative pressure P/P₀ from 0 to 0.99 is mapped by using the specific surface and pore size analyzer where nitrogen or argon is used as the adsorption gas, and the specific surface area of the positive electrode active material is calculated by the BET method. When the testing sample is the positive electrode plate, the positive electrode active material layer may be dissolved in a suitable solvent, then ultrasonically dispersed and centrifuged to remove the conductive agent particles, and then dried to obtain the positive electrode active material powder; the specific surface area of the positive electrode active material may be measured using the aforementioned method.

The specific surface area of the negative electrode active material is measured with reference to the aforementioned method.

The mean interplanar spacing d₀₀₂ of the negative electrode active material may be measured with an X-ray powder diffractometer, for example, an X-ray diffractometer with a type of Brucker D8A_A25 (from Brucker AxS, Germany), wherein CuK_{α} ray is used as radiation source, a ray wavelength λ is 1.5418 Å, a scanning angle 2θ is from 10° to 90° and a scanning rate is 4°/min.

The porosity of the active material layer has a well-known meaning in the art, and may be measured with an instrument and a method well-known in the art, for example, a full-automatic true density instrument with a type AccuPyc II 1340 (from Micromeritics, USA) is used, and the measurement can be carried out with reference to GB/T 24586-2009 on determination of apparent density, true density and porosity of iron ores). The measurement comprises the steps of: cutting the electrode plate and selecting 30 small wafers with a diameter of 14 mm; measuring the true volume of the 30 small wafers with a diameter of 14 mm based on the gas adsorption principle and by using an inert gas (such as helium or nitrogen) as a medium; calculating the porosity of the active material layer of the electrode plate according to the relationship between the apparent volume and the true volume of the electrode plate, and the apparent volume of the electrode plate is obtained according to the area, the thickness and the number of the small wafers.

The areal density of the active material layer has a well-known meaning in the art, and may be measured with an instrument and a method well-known in the art. For example, a mass of the electrode plate with a certain area is weighed by using a Sartorius electronic balance, the mass of the active material layer = the mass of the electrode plate - the mass of the current collector, the areal density of the active material layer = (the mass of the active material layer × the mass percentage of the active material in the active material layer) / the area of the electrode plate.

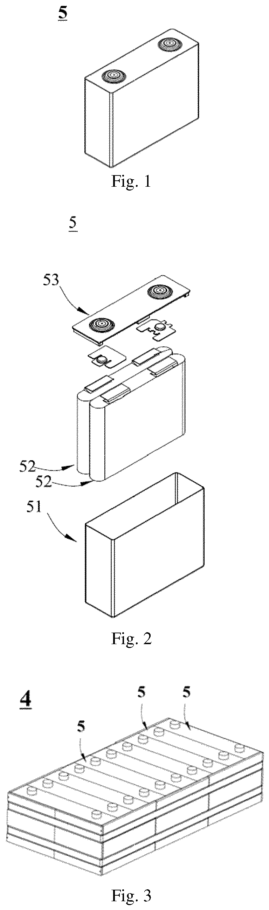

There is no specific limitation on the shape of the sodium-ion battery in the present application, which may be cylindrical, square or any other suitable shapes. Fig. 1 is a sodium-ion battery 5 in the shape of a square as an example.

In some embodiments, the sodium-ion battery may comprise an outer package for encapsulating the positive electrode plate, the negative electrode plate, the separator and the electrolyte.

In some embodiments, the outer package of the sodium-ion battery may be a soft bag, such as a bag-type soft bag. The soft bag may be made from plastic, such as polypropylene (PP), polybutylene terephthalate (PBT), polybutylene succinate (PBS) or combination thereof. The outer package of the sodium-ion battery may also be a hard case, such as a hard plastic case, an aluminum case and a steel case.

In some embodiments, referring to Fig. 2, the outer package may comprise a case 51 and a cover plate 53. The case 51 may comprise a bottom plate and a side plate connecting to the bottom plate, the bottom plate and the side plate are enclosed to form a housing chamber. The case 51 has an opening communicating with the housing chamber, and the cover plate 53 may cover the opening so as to close the housing chamber.

The positive electrode plate, the separator and the negative electrode plate may be laminated or wound to form an electrode assembly 52 having a laminated structure or a wound structure. The electrode assembly 52 is encapsulated in the housing chamber. The electrolyte infiltrates the electrode assembly 52.

One or more electrode assemblies 52 may be included in the sodium-ion battery 5 and the specific number of the electrode assemblies 52 may be adjusted according to requirements.

In some embodiments, the sodium-ion battery may be assembled into a battery module, a plurality of sodium-ion batteries can be included in the battery module, and the specific number of the sodium-ion batteries may be adjusted according to the application and desirable capacity of the battery module.

Fig. 3 is a battery module 4 as an example. Referring to Fig. 3, in the battery module 4, a plurality of sodium-ion batteries 5 may be disposed in sequence in the length direction of the battery module 4. Of course, the plurality of sodium-ion batteries 5 may also be disposed in any other manner. Furthermore, the plurality of sodium-ion batteries 5 may be fixed using fasteners.

Optionally, the battery module 4 may further comprise a housing with a receiving space, and the plurality of sodium-ion batteries 5 are received in the receiving space.

In some embodiments, the aforementioned battery module may further be assembled into a battery pack, and the number of the battery modules included in the battery pack may be adjusted according to the application and desirable capacity of the battery pack.

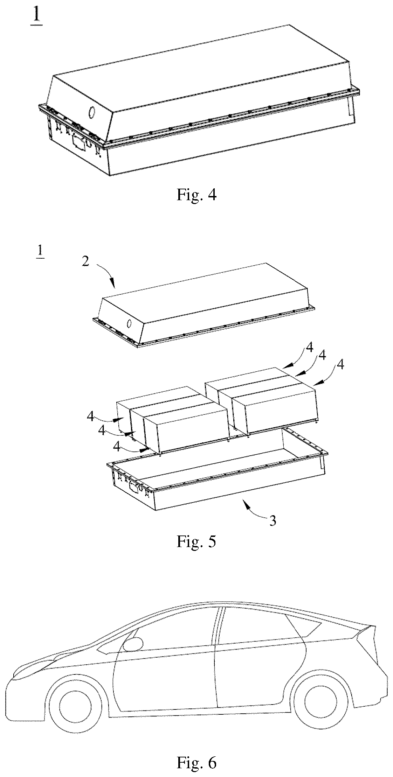

Fig. 4 and Fig. 5 are a battery pack 1 as an example. Referring to Fig. 4 and Fig. 5, the battery pack 1 may comprise a battery case and a plurality of battery modules 4 disposed in the battery case. The battery case comprises an upper case body 2 and a lower case body 3, the upper case body 2 may cover the lower case body 3 to form a closed space for receiving the plurality of battery modules 4. The plurality of battery modules 4 may be disposed in the battery case in any manner.

### Apparatus

In a second aspect of the present application, there is provided an apparatus, which comprises the sodium-ion battery according to the first aspect of the present application. The sodium-ion battery may be used as a power supply of the apparatus, and may also be used as an energy storage unit of the apparatus. The apparatus may be, but is not limited to, a mobile device (e.g., a mobile phone, a laptop computer), an electric vehicle (e.g., a pure electric vehicle, a hybrid electric vehicle, a plug-in hybrid electric vehicle, an electric bicycle, an electric scooter, an electric golf vehicle, an electric truck), an electric train, a ship, a satellite, an energy storage system, etc.

The apparatus may comprise the sodium-ion battery, the battery module or the battery pack according to its practical requirements.

Fig. 6 is an apparatus as an example. The apparatus is a pure electric vehicle, a hybrid electric vehicle, or a plug-in hybrid electric vehicle. In order to meet the requirements of the apparatus for high power and high energy density of batteries, the battery pack or the battery module can be used.

As another example, the apparatus may be a mobile phone, a tablet computer, a laptop computer, and the like. The apparatus is generally required to be thin and light, and the sodium-ion battery can be used as a power supply.

### Examples

The disclosure of the present application is described in more details through the following examples, which are only for illustrative purpose, because it is apparent to a person of ordinary skill in the art that various modifications and changes could be made within the scope of the disclosure of the present application. Unless otherwise stated, all parts, percentages, and ratios reported in the examples below are based on weight, all the reagents used in the examples are commercially available or synthesized according to conventional methods and can be directly used without further treatment, and all the instruments used in the examples are commercially available.

### Example 1

### 1) Preparation of positive electrode plate

Na₃V₂(PO₄)₂O₂F as a positive electrode active material, acetylene black as a conductive agent of, and polyvinylidene fluoride (PVDF) as a binder at a mass ratio of 80: 10: 10 were sufficiently stirred and mixed in an appropriate amount of N-methylpyrrolidone (NMP) to form a uniform positive electrode slurry; the positive electrode slurry was coated on an aluminum foil as a positive electrode current collector with a thickness of 12 µm, dried at 100°C and then pressed to obtain a positive electrode plate.

### 2) Preparation of negative electrode plate

Hard carbon as a negative electrode active material, acetylene black as a conductive agent, styreneic block copolymers (SBCs) as a binder, sodium carboxymethyl cellulose (CMC-Na) as a thickener at a mass ratio of 90:5:4:1 were sufficiently stirred and mixed in an appropriate amount of deionized water to form a uniform negative electrode slurry; the negative electrode slurry was coated on a copper foil as a negative electrode current collector with a thickness of 12 µm, dried at 100°C and then pressed to obtain a negative electrode plate.

### 3) Polyethylene film (celgard) was used as the separator.

### 4) Preparation of electrolyte

Equal volumes of ethylene carbonate (EC) and propylene carbonate (PC) were uniformly mixed to obtain an organic solvent, and then NaPF₆ was uniformly dissolved in the aforementioned organic solvent to obtain the electrolyte, wherein NaPF₆ had a concentration of 1 mol/L.

### 5) The positive electrode plate, the separator and the negative electrode plate were stacked in order, which was followed by electrolyte injection and encapsulation, then the sodium-ion battery was obtained.

### Examples 2-16 and Comparative Examples 1-6

In Examples 2-16 (Ex. 2-16) and Comparative Examples 1-6 (CE. 1-6), the preparation processes similar to those of Example 1 were used, except for relevant parameters in the preparation process of the positive electrode plate and the preparation process of the negative electrode plate, and the specific parameters were shown in Table 1 in detail as below.

### Testing section

1. Testing of active material:
   (1) Testing of median particle size of positive electrode active material and negative electrode active material

The measurement was carried out with a Mastersizer 3000 laser particle size analyzer by using a laser light scattering method.

The testing method comprised steps of: dispersing 0.05 g of the positive electrode active material powder into 50 ml of deionized water to form a suspension by means of 10-minute ultrasonically dispersion; dropwisely adding the suspension into the deionized water until the shading degree was in a range of from 10% to 15%; starting the measurement and automatically calculating the median particle size A of the positive electrode active material through the instrument.

In addition, when the testing sample was a positive electrode plate, the positive electrode active material layer might be dissolved in a suitable solvent, then ultrasonically dispersed and centrifuged to remove the conductive agent particles, then dried to obtain the positive electrode active material powder, and the median particle size A of the positive electrode active material might be measured by using the aforementioned testing method.

The median particle size B of the negative electrode active material was measured by using the aforementioned testing method.

### 2. Testing of performance of sodium-ion battery:

### (1) Testing of initial coulombic efficiency

At 23±2 °C and under a normal pressure (0.1 MPa), the sodium-ion battery prepared in each of the examples and comparative examples was charged at a constant current of 0.1 C to an upper limit of the charging-discharging cut-off voltage; the charging capacity at this time was recorded as the first charging capacity of the sodium-ion battery. After the sodium-ion battery was allowed to stand for 5 minutes, it was discharged at a constant current of 0.1 C to a lower limit of the charging-discharging cut-off voltage, and then allowed to stand for 5 minutes; the discharging capacity at this time was recorded as the first discharging capacity of the sodium-ion battery.

In the test, for Examples 1 to 9 and Comparative Examples 1 to 2, a range of the charging-discharging cut-off voltage was from 2.0 V to 4.3 V; for Example 10 and Comparative Examples 3 to 4, the range of the charging-discharging cut-off voltage was from 2.5 V to 4.05 V; for Example 11 and Comparative Examples 5 to 6, the range of the charging-discharging cut-off voltage was from 2.0 V to 4.5 V; for Example 12, the range of the charging-discharging cut-off voltage was from 2.0 V to 4.5 V; for Example 13, the range of the charging-discharging cut-off voltage was from 1.5 V to 4.5 V; for Example 14, the range of the charging-discharging cut-off voltage was from 2.0 V to 4.5 V; for Example 15, the range of the charging-discharging cut-off voltage was from 2.0 V to 4.3 V; for Example 16, the range of the charging-discharging cut-off voltage was from 2.0 V to 4.0 V; and the initial coulombic efficiency of the sodium-ion battery (%) = the first discharging capacity / the first charging capacity × 100%.

### (2) Testing of rate performance

At 23±2 °C and under a normal pressure (0.1 MPa), the sodium-ion battery prepared in each of the examples and comparative examples was charged at a constant current of 0.1 C to the upper limit of the charging-discharging cut-off voltage, and then discharged at a constant current of 0.1 C to the lower limit of the charging-discharging cut-off voltage, and the discharge capacity Q₁ at a rate of 0.1 C of the sodium-ion battery was obtained.

At 25 °C and under a normal pressure (0.1 MPa), the sodium-ion battery was continued to be charged at a constant current of 4 C to the upper limit of the charging-discharging cut-off voltage, and then discharged at a constant current of 4 C to the lower limit of the charging-discharging cut-off voltage, and the discharge capacity Q₂ at a rate of 4 C of the sodium-ion battery was obtained.

The upper and lower limit of the charging-discharging cut-off voltage of the sodium-ion battery prepared in each of the examples and comparative examples were the same as those in the aforementioned testing of the initial coulombic efficiency.

The 4 C / 0.1 C capacity retention rate of the sodium-ion battery (%) = Q₂/ Q₁ × 100%.

Four testing samples were chosen inform each of the examples and comparative examples, and the average thereof was taken as the testing result.

The testing results of Examples 1 to 16 and Comparative Examples 1 to 6 were shown in Table 1 and Table 2 as below.

**Table 1**

| | Positive electrode active material | Median particle size A of positive electrode active material (µm) | Median particle size B of negative electrode active material (µm) | Areal density C of positive electrode active material layer (mg/cm²) | Areal density D of negative electrode active material layer (mg/cm²) | Ratio of median particle size A/B | Ratio of areal density C/D |
|---|---|---|---|---|---|---|---|
| Ex. 1 | Na₃V₂(PO₄)₂O₂F | 0.5 | 10 | 6 | 4 | 0.05 | 1.5 |
| Ex. 2 | Na₃V₂(PO₄)₂O₂F | 0.5 | 2 | 6 | 2.5 | 0.25 | 2.4 |
| Ex. 3 | Na₃V₂(PO₄)₂O₂F | 0.5 | 5 | 6 | 2 | 0.1 | 3 |
| Ex. 4 | Na₃V₂(PO₄)₂O₂F | 5 | 15 | 18 | 7 | 0.33 | 2.57 |
| Ex. 5 | Na₃V₂(PO₄)₂O₂F | 5 | 5 | 18 | 8 | 1 | 2.25 |
| Ex. 6 | Na₃V₂(PO₄)₂O₂F | 5 | 2 | 18 | 10 | 2.5 | 1.8 |
| Ex. 7 | Na₃V₂(PO₄)₂O₂F | 12 | 4 | 24 | 15 | 3 | 1.6 |
| Ex. 8 | Na₃V₂(PO₄)₂O₂F | 12 | 12 | 24 | 10 | 1 | 2.4 |
| Ex. 9 | Na₃V₂(PO₄)₂O₂F | 12 | 15 | 24 | 5.33 | 0.8 | 4.5 |
| Ex. 10 | Na_{0.9}Cu_{0.22}Fe_{0.3}Mn_{0.47}Al_{0.01}O₂ | 15 | 5 | 12 | 5.5 | 3 | 2.18 |
| Ex. 11 | Na_{0.67}Mn_{0.7}Ni_{0.1}Mg_{0.2}O₂ | 20 | 10 | 12 | 4.5 | 2 | 2.67 |
| Ex. 12 | NaLi_{0.08}Ni_{0.15}Mn_{0.55}Fe_{0.22}O₂ | 10 | 8 | 20 | 6 | 1.25 | 3.33 |
| Ex. 13 | Na₂FePO₄F | 0.2 | 2 | 8 | 3.5 | 0.1 | 2.29 |
| Ex. 14 | Na₂Fe₂(SO4)₃ | 1 | 1.5 | 8 | 3 | 0.67 | 2.67 |
| Ex. 15 | Na₄Mn_{1.5}Fe_{1.5}(PO₄)₂(P₂O₇) | 0.5 | 4 | 10 | 4.5 | 0.13 | 2.22 |
| Ex. 16 | Na₂MnFe(CN)₆•3.5H₂O | 0.5 | 2.5 | 15 | 5.5 | 0.2 | 2.73 |
| CE. 1 | Na₃V₂(PO₄)₂O₂F | 0.2 | 10 | 6 | 4 | 0.02 | 1.5 |
| CE. 2 | Na₃V₂(PO₄)₂O₂F | 12 | 2 | 24 | 15 | 6 | 1.6 |
| CE. 3 | Na_{0.9}Cu_{0.22}Fe_{0.3}Mn_{0.47}Al_{0.01}O₂ | 0.45 | 15 | 12 | 5.5 | 0.03 | 2.18 |
| CE. 4 | Na_{0.9}Cu_{0.22}Fe_{0.3}Mn_{0.47}Al_{0.01}O₂ | 18 | 4 | 12 | 5.5 | 4.5 | 2.18 |
| CE. 5 | Na_{0.67}Mn_{0.7}Ni_{0.1}Mg_{0.2}O₂ | 0.4 | 13 | 12 | 4.5 | 0.03 | 2.67 |
| CE. 6 | Na_{0.67}Mn_{0.7}Ni_{0.1}Mg_{0.2}O₂ | 20 | 4 | 12 | 4.5 | 5 | 2.67 |

**Table 2**

| | Initial coulombic efficiency (%) | 4 C / 0.1 C Capacity retention rate (%) |
|---|---|---|
| Example 1 | 81 | 71 |
| Example 2 | 87 | 82 |
| Example 3 | 86 | 80 |
| Example 4 | 85 | 78 |
| Example 5 | 82 | 79 |
| Example 6 | 80 | 71 |
| Example 7 | 78 | 70 |
| Example 8 | 81 | 74 |
| Example 9 | 80 | 72 |
| Example 10 | 83 | 75 |
| Example 11 | 85 | 82 |
| Example 12 | 89 | 80 |
| Example 13 | 85 | 68 |
| Example 14 | 80 | 69 |
| Example 15 | 79 | 70 |
| Example 16 | 86 | 79 |
| Comparative example 1 | 72 | 58 |
| Comparative example 2 | 68 | 55 |
| Comparative example 3 | 74 | 52 |
| Comparative example 4 | 70 | 47 |
| Comparative example 5 | 62 | 53 |
| Comparative example 6 | 71 | 51 |

It could be seen from comparison between Examples 1 to 9 and Comparative Examples 1 to 2, Example 10 and Comparative Examples 3 to 4, Example 11 and Comparative Examples 5 to 6, when the ratio of the median particle size A of the positive electrode active material to the median particle size B of the negative electrode active material was less than 0.05 or more than 3, the capacity loss of the sodium-ion battery during the first charging and discharging process was larger, and the charging and discharging performance at a high rate was worse, and therefore, the initial coulombic efficiency and the capacity retention rate at a high rate of the sodium-ion battery both were lower. The examples of the present application controlled the ratio of the median particle size A of the positive electrode active material to the median particle size B of the negative electrode active material to fall within a range of from 0.05 to 3, so that the capacity loss during the first charging and discharging process of the sodium-ion battery was reduced, and the capacity elaboration of the sodium-ion battery at a high rate was improved, which significantly improved the initial coulombic efficiency and the rate performance of the sodium-ion battery were significantly improved.

Above described are only specific implementations of the present application, but the claim scope of the present application is not intended to be limited thereto. Any modification, replacement, or other equivalent readily conceived by a person of ordinary skill in the art according to the disclosure of the present application shall fall within the protection scope of the present application. Therefore, the protection scope of the present application shall be determined by the protection scope of the claims.

The invention will now be described further in the following numbered clauses.
1. A sodium-ion battery (5), comprising a positive electrode plate and a negative electrode plate,
   wherein the positive electrode plate comprises a positive electrode current collector and a positive electrode active material layer, the positive electrode active material layer is disposed on at least one surface of the positive electrode current collector and comprises a positive electrode active material;
   the negative electrode plate comprises a negative electrode current collector and a negative electrode active material layer, the negative electrode active material layer is disposed on at least one surface of the negative electrode current collector and comprises a negative electrode active material, and the negative electrode active material is hard carbon; and
   wherein a ratio of a median particle size A of the positive electrode active material to a median particle size B of the negative electrode active material satisfies 0.05 ≤ A/B ≤ 3.
2. The sodium-ion battery (5) according to clause 1, wherein the ratio of the median particle size A of the positive electrode active material to the median particle size B of the negative electrode active material satisfies 0.1 ≤ A/B ≤ 1.
3. The sodium-ion battery (5) according to clause 1 or 2, wherein the positive electrode active material has a median particle size A of from 0.2 µm to 20 µm, preferably from 0.6 µm to 15 µm; and/or, the negative electrode active material has a median particle size B of from 0.5 µm to 20 µm, preferably from 3 µm to 15 µm.
4. The sodium-ion battery (5) according to any one of clauses 1-3, wherein the positive electrode active material has a specific surface area of from 0.1 m²/g to 20 m²/g, preferably from 0.5 m²/g to 15 m²/g; and/or,
   the negative electrode active material has a specific surface area of from 0.5 m²/g to 15 m²/g, preferably from 1 m²/g to 12 m²/g.
5. The sodium-ion battery (5) according to any one of clauses 1-4, wherein a mean interplanar spacing d₀₀₂ of crystal planes (002) of the negative electrode active material is from 0.35 nm to 0.42 nm.
6. The sodium-ion battery (5) according to any one of clauses 1-5, wherein a ratio of a porosity of the positive electrode active material layer to a porosity of the negative electrode active material layer is from 0.15 to 2.5, preferably from 0.3 to 1.8.
7. The sodium-ion battery (5) according to any one of clauses 1-6, wherein the positive electrode active material layer has a porosity of from 10% to 40%, preferably from 20% to 38%; and/or, the negative electrode active material layer has a porosity of from 15% to 45%, preferably from 28% to 38%.
8. The sodium-ion battery (5) according to any one of clauses 1-7, wherein a ratio of an areal density C of the positive electrode active material layer to an areal density D of the negative electrode active material layer satisfies 1.5 ≤ C/D ≤ 4.5, preferably 2.1 ≤ C/D ≤ 2.8.
9. The sodium-ion battery (5) according to any one of clauses 1-8, wherein the positive electrode active material layer has an areal density C of from 5 mg/cm² to 30 mg/cm²; and/or, the negative electrode active material layer has an areal density D of from 1.5 mg/cm² to 15 mg/cm².
10. The sodium-ion battery (5) according to any one of clauses 1-9, wherein the positive electrode active material comprises one or more of sodium transition metal oxides, polyanionic compounds and Prussian blue compounds.
11. An apparatus, comprising the sodium-ion battery (5) according to any one of clauses 1-10.

## Claims

1. A sodium-ion battery (5), comprising a positive electrode plate and a negative electrode plate,
wherein the positive electrode plate comprises a positive electrode current collector and a positive electrode active material layer, the positive electrode active material layer is disposed on at least one surface of the positive electrode current collector and comprises a positive electrode active material;
the negative electrode plate comprises a negative electrode current collector and a negative electrode active material layer, the negative electrode active material layer is disposed on at least one surface of the negative electrode current collector and comprises a negative electrode active material, and the negative electrode active material is hard carbon; and
wherein a ratio of a median particle size A of the positive electrode active material to a median particle size B of the negative electrode active material satisfies 0.8 ≤ A/B ≤ 3, and
wherein the positive electrode active material comprises one or more of sodium transition metal oxides selected from
Na_{1-*x*}Cu*ₕ*Fe*ₖ*Mn*ₗ*M¹ₘO_{2-*y*}, wherein M¹ is one or more of Li, Be, B, Mg, Al, K, Ca, Ti, Co, Ni, Zn, Ga, Sr, Y, Nb, Mo, In, Sn and Ba, 0 < *x* ≤ 0.33, 0< *h* ≤ 0.24, 0 ≤ *k* ≤ 0.32, 0 < *l* ≤ 0.68, 0 < *m* < 0.1, *h+k+l+m*=1, 0 ≤ y < 0.2;
Na_{0.67}Mn_{0.7}Ni_{z}M²_{0.3-*z*}O₂, wherein M² is one or more of Li, Mg, Al, Ca, Ti, Fe, Cu, Zn and Ba, 0 < *z* ≤ 0.1;
Na*ₐ*Li*_{b}*Ni*_{c}*Mn*_{d}*Fe*ₑ*O₂, wherein 0.67 < *a* ≤ 1,0 *< b* < 0.2, 0 < *c* < 0.3, 0.67 < *d+e <* 0.8, *b+c+d+e*=1*.*

2. The sodium-ion battery (5) according to claim 1, wherein the ratio of the median particle size A of the positive electrode active material to the median particle size B of the negative electrode active material satisfies 1.25 ≤ A/B ≤ 3.

3. The sodium-ion battery (5) according to claim 1 or 2, wherein the positive electrode active material has a median particle size A of from 0.2 µm to 20 µm, preferably from 0.6 µm to 15 µm; and/or,
the negative electrode active material has a median particle size B of from 0.5 µm to 20 µm, preferably from 3 µm to 15 µm.

4. The sodium-ion battery (5) according to any one of claims 1-3, wherein the positive electrode active material has a specific surface area of from 0.1 m²/g to 20 m²/g, preferably from 0.5 m²/g to 15 m²/g; and/or,
the negative electrode active material has a specific surface area of from 0.5 m²/g to 15 m²/g, preferably from 1 m²/g to 12 m²/g.

5. The sodium-ion battery (5) according to any one of claims 1-4, wherein a mean interplanar spacing d₀₀₂ of crystal planes (002) of the negative electrode active material is from 0.35 nm to 0.42 nm.

6. The sodium-ion battery (5) according to any one of claims 1-5, wherein a ratio of a porosity of the positive electrode active material layer to a porosity of the negative electrode active material layer is from 0.15 to 2.5, preferably from 0.3 to 1.8.

7. The sodium-ion battery (5) according to any one of claims 1-6, wherein the positive electrode active material layer has a porosity of from 10% to 40%, preferably from 20% to 38%; and/or,
the negative electrode active material layer has a porosity of from 15% to 45%, preferably from 28% to 38%.

8. The sodium-ion battery (5) according to any one of claims 1-7, wherein a ratio of an areal density C of the positive electrode active material layer to an areal density D of the negative electrode active material layer satisfies 1.5 ≤ C/D ≤ 4.5, preferably 2.1 ≤ C/D ≤ 2.8.

9. The sodium-ion battery (5) according to any one of claims 1-8, wherein the positive electrode active material layer has an areal density C of from 5 mg/cm² to 30 mg/cm²; and/or,
the negative electrode active material layer has an areal density D of from 1.5 mg/cm² to 15 mg/cm².

10. An apparatus, comprising the sodium-ion battery (5) according to any one of claims 1-9.
